# EUROPÄISCHE PATENTANMELDUNG

(11) **EP 1 983 283 A1**
(43) Veröffentlichungstag der Anmeldung: **22.10.2008**
(21) Anmeldenummer: 08154228.4
(22) Anmeldetag: 09.04.2008
(51) Int. Cl.: F26B 13/00, D21F 5/00, D21F 5/02, F16J 15/46

(54) **Dichtungsanordnung für eine Trockeneinrichtung in einer Maschine zur Herstellung einer Faserstoffbahn**

(30) Priorität: 19.04.2007 DE 102007018529
(71) Anmelder: Voith Patent GmbH, 89522 Heidenheim (DE)
(72) Erfinder: Attwenger, Robert, 1170, Wien (AT); Boden, Herbert, 3100, St. Pölten (AT); Kloibhofer, Rainer, 3371, Neumarkt (AT)

(57) **Zusammenfassung**

Die Erfindung betrifft eine Dichtungsanordnung (3) zur Abdichtung eines ersten, ein unter Druck stehendes Medium enthaltendes Bauelement (1) durch wenigstens ein eine Dichtfläche (4) bildendes Dichtelement (5) gegenüber einem relativ zum Dichtelement (5) bewegten Bauteil (6).

Die Erfindung ist dadurch gekennzeichnet, dass Mittel (16) zum wenigstens mittelbaren frei einstellbaren Auftrag eines Schmiermediums auf die Dichtfläche (4) vorgesehen sind.

## Beschreibung

Die Erfindung betrifft eine Dichtungsanordnung, im Einzelnen mit den Merkmalen aus dem Oberbegriff von Anspruch 1; ferner eine Verwendung einer derartigen Dichtungsanordnung in einer Trockeneinrichtung einer Maschine zur Herstellung einer Faserstoffbahn.

Dichtungsanordnungen zum Abdichten eines ersten, ein unter Druck stehendes Medium enthaltenden Bauelementes durch ein Dichtelement gegenüber einem relativ zu dem ersten Bauelement bewegten zweiten Bauelement, sind in einer Vielzahl von Ausführungen aus dem Stand der Technik bekannt. In Maschinen zur Herstellung einer Faserstoffbahn finden diese Anwendung in einer Trockeneinrichtung, insbesondere als Haubendichtungen zur Abdichtung zwischen einer auf einen Trockenzylinder aufgesetzten Druckhaube und dem Trockenzylinder beziehungsweise dem um diesen geführten und relativ gegenüber der Druckhaube bewegten Band. Bei den Dichtungsanordnungen handelt es sich um berührende Dichtungen in Form von schleifenden Dichtungen, bei welchen die Dichtfläche des Dichtelementes direkt am bewegten Bauteil anliegt, wodurch eine Gleitpaarung zwischen den beiden Körpern mit Festkörperreibung vorliegt. Derartige Dichtungsanordnungen sind beispielsweise in den Druckschriften DE 10 2004 017 827 A1, DE 10 2004 017 819 A1, DE 10 2004 017 817 A1 und DE 10 2004 017 806 A1 beschrieben.

Die Druckschrift DE 10 2004 017 827 A1 offenbart eine Dichtungsanordnung, bei welcher das Dichtelement in einem gemeinsam mit dem Dichtelement verschleißbaren Dichtungshalter eingebracht ist. Dadurch wird erreicht, dass der Dichtungsvorgang formstabil bleibt, aber weicher ist als die zu dichtende Oberfläche.

Bei schleifenden Dichtungen bewirken die auftretenden Reibungskräfte neben einem erhöhten Verschleiß der an der Reibpaarung beteiligten Elemente einen Widerstand gegenüber der Bewegung des bewegten Bauelementes, so dass eine höhere Antriebsleistung erforderlich wird. Die dadurch hervorgerufene erhebliche Wärmeentwicklung an den Dichtungen beziehungsweise am dichten Band begünstigt raschen Verschleiß, wobei durch lokale Überhitzungen auch Zerstörungen auftreten können. Zur Vermeidung dieser Nachteile wird daher eine geringe Leckagemenge des unter Druck stehenden Mediums zugelassen, welche sich in Abhängigkeit des Druckes in der Druckhaube einstellt. Aus der Druckschrift DE 10 2004 017 819 A1 ist dazu eine Dichtungsanordnung vorbekannt, welche durch eine weitere zweite Dichtung charakterisiert ist, die in der Richtung, in der unter Druck stehendes Medium aus dem ersten Bauelement entweicht oder entweichen kann, der ersten Dichtung nachgeordnet ist. Weist dabei die erste Dichtung eine gewisse Undichtheit auf, kann durch sie austretendes Medium, insbesondere wenn es sich um eine Flüssigkeit handelt, die Fläche, an der die zweite Dichtung auf der Oberfläche des zweiten Bauelementes gleitet, schmieren und dadurch die Reibung vermindern. Dabei ist die Schmierwirkung abhängig von der Menge des durch die erste Dichtung entweichenden Mediums und damit von den Betriebsparametern der Gesamtanlage. Dies gilt in Analogie auch für die in den Druckschriften DE 10 2004 017 806 A1 und DE 10 2004 017 817 A1 beschriebenen Dichtungsanordnungen, die als zweistufige Dichtungsanordnung ausgeführt sind. Bei dieser ist der Schmiereffekt am zweiten Dichtelement der Dichtungsanordnung immer abhängig von der Leckage durch das erste Dichtelement. Diese kann jedoch, insbesondere durch ungleichmäßigen Verschleiß am ersten Dichtelement, über die Länge und Breite des ersten Dichtelementes unterschiedlich ausfallen, so dass am zweiten nachgeordneten Dichtelement über dessen Länge ebenfalls unterschiedliche Schmiereffekte erzielt werden. Dies führt im ungünstigsten Fall zu unterschiedlichen Reibzuständen über die Erstreckung des Dichtelementes, insbesondere über die Maschinenbreite und begünstigt eine ungleichmäßige Abnutzung des Dichtelementes, die zu verkürzten Wartungsintervallen für das Dichtelement führen kann. Ferner kann eine schlechtere Dichtwirkung der Dichtungsanordnung die Funktion der Trockeneinrichtung beeinträchtigen.

Der Erfindung liegt daher die Aufgabe zugrunde, eine Dichtungsanordnung der eingangs genannten Art, insbesondere für den Einsatz in Trockeneinrichtungen von Maschinen zur Herstellung von Faserstoffbahnen derart weiterzuentwickeln, dass zum einen eine gute Abdichtung zwischen zwei relativ zueinander bewegbaren Bauelementen erzielt wird und für die Abdichtung zwischen einer Druckhaube und einem umlaufenden Band die Reibung an der Haubendichtung reduziert wird, um die erforderliche Antriebsleistung und den auftretenden Verschleiß an den Dichtelementen möglichst gering zu halten. Die einzelnen Dichtelemente sind dabei vor Zerstörung durch Überhitzen zu schützen.

Die erfindungsgemäße Lösung ist durch die Merkmale der Ansprüche 1 und 16 charakterisiert. Vorteilhafte Ausgestaltungen sind in den Unteransprüchen beschrieben.

Eine Dichtungsanordnung zur Abdichtung eines ersten, ein unter Druck stehendes Medium enthaltenden Bauelementes durch wenigstens ein, eine Dichtfläche bildendes Dichtelement gegenüber einem relativ zum Dichtelement bewegten Bauteil ist erfindungsgemäß dadurch charakterisiert, dass diese Mittel zum wenigstens mittelbaren Auftrag eines Schmiermediums auf die Dichtfläche aufweist.

Als Schmiermedium findet dabei eine Flüssigkeit, ein Gas, ein Gasgemisch und/oder ein Flüssigkeits- Gas-Gemisch Verwendung. Gemäß einer besonders vorteilhaften Ausführung wird aufgrund der einfachen Bereitstellbarkeit, insbesondere bei Anwendungen in Maschinen zur Herstellung von Faserstoffbahnen aufgrund der ohnehin erforderlichen Prozesskreisläufe, Wasser verwendet. Der sich durch Aufbringen des Schmiermediums bildende Schmiermedienfilm, insbesondere der Wasserfilm, führt zu einer Abnahme des Reibungskoeffizienten an den an der Gleitpaarung beteiligten Flächen, insbesondere der immer beteiligten Dichtfläche am Dichtelement und erzeugt zusätzlich eine Kühlwirkung an diesem. Im Einzelnen wird die Festkörperreibung durch eine Flüssigkeitsreibung oder zumindest Mischreibung ersetzt. Dies resultiert in einem verringerten Verschleiß der Dichtflächen und auch am bewegten Bauteil.

Die Schmiermedienmenge, insbesondere Schmierwassermenge kann durch die unabhängige Bereitstellung gegenüber der Bereitstellung des unter Druck stehenden Mediums in der Druckhaube über ein separates und vollständig autarkes System unabhängig von der Leckage am Dichtelement variabel eingestellt werden. Es besteht dabei gemäß einer besonders vorteilhaften Ausführung die Möglichkeit, den Schmiermedienfilm über die Abmessungen der Dichtfläche örtlich unterschiedlich einzustellen, wodurch auf lokale Abweichungen der Dichtwirkung, die durch konstruktive oder technologische Abweichungen im Verfahrensablauf über die Maschinenbreite betrachtet bedingt sein können, reagiert werden kann. Die Schmiermedienfilmmenge sowie die Zufuhr wird vorzugsweise als Funktion der Oberflächenparameter der an der Gleitpaarung beteiligten Flächen und der Prozessparameter, insbesondere auch der Größe der Relativbewegung der Flächen zueinander geregelt, insbesondere gesteuert.

Gemäß einer besonders vorteilhaften Ausführung erfolgt der wenigstens mittelbare, dass heißt direkte oder indirekte Auftrag von Schmiermedium kontinuierlich, um keinen Abriss des zur Herabsetzung des Reibungskoeffizienten der Oberfläche der Dichtfläche erforderlichen Schmierfilms während des Betriebes der Vorrichtung, in welcher die Dichteinrichtung integriert ist, hervorzurufen.

Die erfindungsgemäße Lösung ist zum einen gemäß einer ersten Ausführungsform durch die direkte Zufuhr eines Schmiermediums zur Dichtfläche oder gemäß einer zweiten Ausführung durch die indirekte Aufbringung charakterisiert. Gemäß der ersten Ausführungsform wird das Schmiermedium durch das Dichtelement direkt zur Dichtfläche geführt. Dazu ist ein Schmiermittelversorgungssystem vorgesehen, das mit der Dichtfläche direkt gekoppelt ist. Dieses weist in einer Ausführung wenigstens einen Anschluss am Dichtelement auf, der mit einer Schmiermedienquelle gekoppelt ist, die außerhalb des Innenraumes des ersten Bauelementes angeordnet ist, und der ferner über zumindest eine Verbindungsleitung mit wenigstens einer an der Dichtfläche liegenden Auslassöffnung verbunden ist. Mit dieser Lösung ist es zum einen möglich, örtlich lokal direkt an der Dichtfläche die Schmiermittelmenge einzustellen, was über die Austrittsquerschnitte, deren Dimensionierung und Anordnung über die Dichtfläche sowie die Betriebsparameter bei Zufuhr realisiert wird. Ferner kann der Schmiermedienfilm zwischen Dichtfläche und dem bewegten Bauteil optimal eingestellt werden.
Bezüglich der Ausführung der Auslassöffnungen an der Dichtfläche für das Schmiermedium bestehen eine Mehrzahl von Möglichkeiten. Diese können in örtlich begrenzten Bereichen an der Dichtfläche angeordnet sein oder sich aber über die gesamte Erstreckung quer zur Bewegungsrichtung des bewegten Bauteiles, insbesondere beim Einsatz in Trockenvorrichtungen von Maschinen zur Herstellung von Faserstoffbahnen quer zur Maschinenrichtung erstrecken. Bei lokaler Anordnung der Auslassöffnungen sind dabei einzelne Auslassöffnungen vorgesehen, die sich in bestimmten Abständen über die Breite erstrecken oder nur in bestimmten Bereichen über die Maschinenbreite vorgesehen sind. Die Anordnung kann ferner in Gruppen erfolgen.

Gemäß einer besonders vorteilhaften Ausführung ist eine durchgängige sich über die Erstreckung quer zur Bewegungsrichtung der Oberfläche des bewegten Bauteiles, insbesondere über die Maschinenbreite erstreckende Auslassöffnung vorgesehen, über die über die gesamte Breite gleichmäßig Schmiermittel austritt. Diese im Bereich der Dichtfläche angeordnete Auslassöffnung, in der Regel eine Nut, erstreckt sich über die Breite und ist mit entweder einem oder einer Mehrzahl von Verbindungskanälen des Schmiermedienversorgungssystems mit einem oder mehreren Anschlüssen am Dichtelement verbunden.

Gemäß einer besonders vorteilhaften Weiterentwicklung wird die Auslassöffnung auch an den Verlauf und die Führung des bewegten Elementes angepasst. Bei Anordnung der Dichtungsanordnung in Trockeneinrichtungen zur Abdichtung einer Druckhaube gegenüber einem Trockenzylinder, insbesondere der Oberfläche des Trockenzylinders und eines um diesen geführten Bandes, wird die Verteilung des Schmiermediums in Umfangsrichtung durch eine nutförmige Ausführung im Querschnitt der Auslassöffnung verbessert. Die geometrische Ausführung der Schmiernut beeinflusst dabei den Schmiereffekt und die Größe der Ausbildung des Schmierfilmes.

Gemäß einer zweiten Ausführungsform der erfindungsgemäßen Lösung erfolgt der Auftrag beziehungsweise die Zufuhr von Schmiermedium zur Dichtfläche indirekt über ein außerhalb der Wirkung der Dichtungsanordnung angeordnetes Schmiermedienbereitstellungssystem, mittels welchem das Schmiermedium auf die Oberfläche des bewegten Bauteiles beziehungsweise eines an diesem geführten Bandes aufgetragen wird, so dass dieses durch die Bewegung des bewegten Bauteiles, insbesondere der Oberfläche das Schmiermediums in den Spalt zwischen diesem und der Dichtfläche eingezogen wird und dadurch den Schmiereffekt ermöglicht. Dabei erfolgt der Auftrag des Schmiermediums als Funktion des sich im Schmierspalt zwischen der Dichtfläche und der bewegten Oberfläche auszubildenden Schmierfilms. Die Ausgestaltung des Schmiermittelauftrages kann ebenfalls entweder örtlich konzentriert oder gleichmäßig quer zur Bewegungsrichtung des bewegten Bauteiles erfolgen. Dabei kann in Abhängigkeit der sich einstellenden Verhältnisse im Dichtspalt die Auftragsmenge über die Erstreckung quer zur Bewegungsrichtung örtlich schwanken oder aber gleichmäßig aufgetragen werden. Im einfachsten Fall erfolgt der Auftrag über ein Spritzrohr mit einer oder einer Vielzahl von Einzeldüsen. Die Schmiermenge bestimmt sich als Funktion der Parameter am Düsenaustritt, der Austrittsgeschwindigkeit, der Geschwindigkeit des bewegten Bauteiles.

Die erfindungsgemäße Lösung ist sowohl für Dichtungsanordnungen mit Einzeldichtelementen geeignet, als auch für mehrstufige Dichtungen. In diesem Fall können bei mehrstufigen Dichtungen, die in der Regel aus zwei oder mehreren hintereinander geschalteten Dichtelementen bestehen, die Dichtelemente in gleicher Art und Weise geschmiert werden. In diesem Fall können beide aus der gleichen Schmiermedienquelle versorgt werden. Denkbar und unter Umständen im Hinblick auf die Anpassung der Schmierverhältnisse besonders vorteilhaft ist es jedoch, an den einzelnen Dichtelementen unterschiedliche Schmiermedien und/oder unterschiedliche Auftragskonzepte, wie die direkte Aufbringung oder die indirekte Aufbringung zu verwenden. Insbesondere beim Einsatz in Trockeneinrichtungen von Maschinen zur Herstellung von Faserstoffbahnen wird dabei die, bezogen auf das unter Druck stehende Medium äußere Dichtung mit Luft geschmiert, während die innere Dichtung mit dem Schmiermedium, insbesondere Wasser, geschmiert wird.

Durch den zusätzlichen Luftauftrag ist es möglich, eine Sperrluftschicht zu erzielen, die vermeidet, dass Leckagewasser nach außen dringt.

Die erfindungsgemäße Lösung ist in besonders vorteilhafter Weise in einer Maschine zur Herstellung einer Faserstoffbahn, insbesondere Papier-, Karton-, Tissue- oder einer anderen Faserstoffbahn einsetzbar, die mindestens einen beheizbaren Trockenzylinder umfasst, der über einen Teil seines äußeren Umfanges durch mindestens eine, einen Anpressdruck gegenüber dem Trockenzylinder ausübende Druckhaube abgedeckt ist, wobei die Faserstoffbahn zusammen mit mindestens einer flüssigkeits- und gasundurchlässigen Bespannung, vorzugsweise zumindest einem Sieb sowie mit einem undurchlässigen Band zwischen dem Trockenzylinder und der Druckhaube hindurchführbar ist. Dabei bildet die Druckhaube den Träger für die Dichtungsanordnung, vorzugsweise in Form einer integrierten oder integralen Dichtungsleiste. Der Trockenzylinder mit der um diesen geführten Bespannung, insbesondere den um diesen geführten Bändern bildet das bewegte Bauteil, während die Druckhaube die Funktion des das unter Druck stehende Medium enthaltenen Bauelementes übernimmt. Bei dieser Ausführung ist eine Herabsetzung des Verschleißes und damit Verlängerung de Lebensdauer der Dichtelemente im Hinblick auf die Verfügbarkeit des Gesamtsystems von erheblicher Bedeutung.

Die Dichtungsanordnung wird vorzugsweise als einziges durchgängiges und umlaufendes Dichtsystem zur vollständigen Abdichtung zwischen Druckhaube und Trockenzylinder beziehungsweise des um diesen geführten Bandes eingesetzt. Denkbar sind jedoch auch aus Dichtelementen zusammengesetzte Dichtungsanordnungen, insbesondere in Längs- und Querrichtung bezogen auf die Bewegungsrichtung des um den Trockenzylinder geführten Bandes beziehungsweise der Bespannung.

Die erfindungsgemäße Lösung wird nachfolgend anhand von Figuren erläutert. Darin ist im Einzelnen folgendes dargestellt:
- Figur 1: verdeutlicht in schematisiert vereinfachter Darstellung in einem Ausschnitt aus einem Längsschnitt durch eine Trockeneinrichtung eine Ausführung einer Dichtungsanordnung gemäß einer ersten Ausführungsform;
- Figur 2: verdeutlicht anhand einer Querschnittsansicht einer Trockeneinrichtung eine mögliche Ausführung dieser mit Verwendung einer erfindungsgemäßen Dichtungsanordnung gemäß Figur 1;
- Figuren 3a und 3b: verdeutlichen mögliche Ausführungen und Anordnungen der Auslassöffnungen und der Führung der Versorgungsverbindungskanäle durch die Dichtelemente;
- Figur 4: verdeutlicht in schematisiert vereinfachter Darstellung anhand eines Ausschnittes eines Querschnittes in Umfangsrichtung einer Trockenhaube eine Ausführung des Dichtelementes mit zusätzlicher Nut in Umfangsrichtung;
- Figur 5: verdeutlicht die Anwendung einer erfindungsgemäßen Lösung in einer zweistufigen Dichtungsanordnung;
- Figur 6: verdeutlicht eine zweite Ausführung erfindungsgemäßer Mittel zum Auftrag von Schmiermedium auf die Dichtfläche.

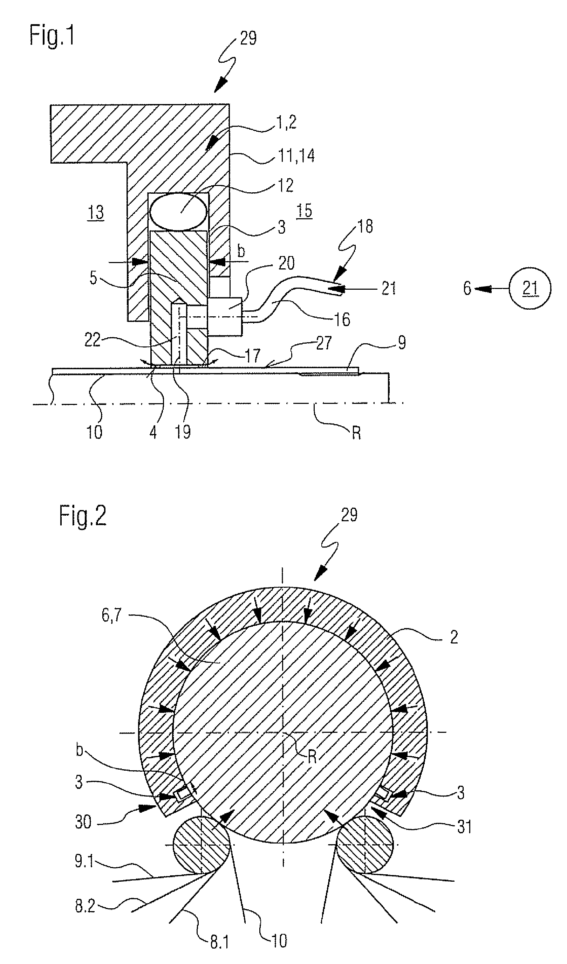

Die Figur 1 verdeutlicht in schematisiert vereinfachter Darstellung einen Ausschnitt aus einem Längsschnitt eines ersten, ein unter Druck stehendes Medium enthaltenden Bauelementes 1, welches gemäß einer besonders vorteilhaften Anwendung in einer Maschine zur Herstellung einer Faserstoffbahn von einer Druckhaube 2 in einer Trockeneinrichtung 29 gebildet wird, mit einer erfindungsgemäß ausgeführten Dichtungsanordnung 3. Die Dichtungsanordnung 3 umfasst zumindest wenigstens ein, wenigstens eine Dichtfläche 4 bildendes Dichtelement 5. Die Dichtungsanordnung 3 dient der Abdichtung des ersten Bauelementes 1 gegenüber einem relativ zum Dichtelement 5 bewegten Bauteil 6. Bei dem relativ zum Bauelement 1 bewegten Bauteil 6 handelt es sich bei der besonders bevorzugten Anwendung um einen Trockenzylinder 7, über welchen eine Faserstoffbahn 10 zumindest zusammen mit einer gesonderten, dichten und für Flüssigkeiten und Gase undurchlässigen Bespannung, insbesondere einem Band 9 geführt wird.

Die Dichtungsanordnung 3 ist vorzugsweise als durchgängige Dichtungsanordnung sowohl an den Längskanten 30, 31 der Druckhaube 2 parallel zur Rotationsachse R des Trockenzylinders 7, d.h. quer zur Durchlaufrichtung der Faserstoffbahn 10 als auch an den stirnseitigen Kanten der Druckhaube 2 gegenüber dem Trockenzylinder 7 angebracht. Figur 1 verdeutlicht daher einen Ausschnitt einer Ausführung einer Trockeneinrichtung 29 mit Dichtungsanordnung 3 im Längsschnitt, d.h. parallel zur Rotationsachse R. Die Figur 2 verdeutlicht eine weitere Ausführung einer Trockeneinrichtung 29 mit einer Dichtungsanordnung 3 im Querschnitt, d.h. senkrecht zu R, d.h. in Laufrichtung der Faserstoffbahn 10 beziehungsweise Bewegungsrichtung des bewegten Bauteiles 6.

Im Allgemeinen erfolgt die Führung der Faserstoffbahn 10 zusammen mit wenigstens einem oder mehreren Siebbändern 8.1, 8.2 und dem dichten, für Flüssigkeiten und Gase undurchlässigen Band 9.1. Eine derartige Ausführung ist beispielhaft anhand einer Querschnittsansicht einer Ausführung einer Trockenanordnung 29 in Figur 2 wiedergegeben. Anstelle der Verwendung mehrerer Siebe 8.1 und 8.2 und einer gesonderten undurchlässigen Bespannung, insbesondere eines Band 9.1 gemäß Figur 2, kann jedoch auch nur ein einziges Band 9 vorgesehen werden, das einen Schichtenaufbau aufweist und die Eigenschaften der Trockensiebbänder 8.1 und 8.2 und der Bespannung beziehungsweise des Bandes 9.1 aufweist. Eine derartige Ausführung ist beispielhaft in Figur 1 dargestellt. Dieses Band 9 verhindert dann eine Rückbefeuchtung, zum Beispiel durch Kondensat der Faserstoffbahn 10 und lässt sich beispielsweise aus einem dampf- aber nicht wasserdurchlässigen Material realisieren, wie zum Beispiel Polyethylen, Tetrafluorethylen. Andernfalls sind Materialien möglich, die durch ein einseitiges Wasseraufnahmevermögen verfügen, dieses jedoch nicht auf der anderen Seite wieder abgeben können.

Die Figur 1 verdeutlicht dabei einen Ausschnitt aus einem Längsschnitt der Druckhaube 2, welche einen Dichtleistenhalter 11 umfasst, in welchem das einzelne Dichtelement 5 angeordnet und geführt ist und sich ferner abstützt. Um einen entsprechenden Kontakt der Dichtfläche 4 am Dichtelement 6 mit dem bewegten Bauteil 6, insbesondere dem um den Trockenzylinder 7 geführten Band 9 zu ermöglichen, ist eine Einrichtung 12 zur Dichtungsanpressung vorgesehen, die sich an der Druckhaube 2 beziehungsweise dem Dichtleistenhalter 11 abstützt und eine Kraft gegen das Dichtelement 5 ausübt. Das Bauelement 1, insbesondere die Druckhaube 2, bildet mit dem Bauteil 6 einen Innenraum 13, in welchem das unter Druck stehende Medium, insbesondere Wasser oder ein Gasgemisch oder Gas oder ein anderes Medium, welches unter einem Überdruck von mehr als 1 bar steht, enthalten ist. Die Dichtungsanordnung 3 wird hier von einer Wandung 14 der Druckhaube 2 aufgenommen, welche gleichzeitig den Dichtleistenhalter 11 bildet. Die Umgebung, das heißt der Raum außerhalb des Innenraumes 13, ist mit 15 bezeichnet. Erfindungsgemäß umfasst die Dichtungsanordnung 3 Mittel 16 zum wenigstens mittelbaren Auftrag eines Schmiermediums auf die Dichtfläche 4. Wenigstens mittelbar bedeutet dabei direkt oder indirekt. Bei dem Schmiermedium handelt es sich vorzugsweise um ein Fluid in Form von Wasser, denkbar ist jedoch auch ein Flüssigkeits- Gas- Gemisch. Ferner ist es auch möglich, als Schmiermedium ein Gas oder Gasgemisch, insbesondere Luft zu verwenden. Das Schmiermedium wird unabhängig vom unter Druck stehenden Medium im Innenraum 13 aufgebracht. Dadurch wird eine freie unabhängige Schmiermittelversorgung der Dichtfläche 4 gewährleistet, die es ermöglicht, durch Ausbildung eines zumindest teilweise sich über die Dichtfläche 4 erstreckenden Schmierfilmes 17 die Reibung zwischen der Dichtungsanordnung 3 für die Druckhaube 2 und dem bewegten Bauteil, insbesondere der Oberfläche 27 des Bandes 9 zu reduzieren, indem Festkörperreibung durch zumindest Mischreibung, vorzugsweise in Abhängigkeit der Ausbildung des Schmierfilmes Schwimmreibung ersetzt wird. Die Verringerung des Reibkoeffizienten in der Gleitpaarung zwischen Dichtelement 5 und Oberfläche 27 des Bandes 9 vermindert den Verschleiß an beiden, wodurch die Wechselintervalle für die Dichtungen als auch die Bänder verlängert werden und damit die mögliche Betriebsdauer. Ferner wird im Dichtbereich durch den Schmierfilm 17 eine Kühlwirkung erzielt.

Die Ausführung gemäß Figur 1 verdeutlicht eine Möglichkeit des direkten Auftrages eines Schmierfilmes 17 an der Dichtfläche 4 durch die Zufuhr von Schmiermedium durch das Dichtelement 5 hindurch zur Dichtfläche 4. In der der Figur 1 ist dieses im Schnitt dargestellt, wobei die Mittel 16 eine Schmiermittelversorgungseinrichtung 18 aufweisen, die mit der Dichtfläche 4, insbesondere wenigstens einer Auslassöffnung 19 an der Dichtfläche 4 gekoppelt ist. Die Kopplung erfolgt hier über wenigstens einen Anschluss 20, der mit einer Schmiermittelquelle 21 verbunden ist, die der Trockenanordnung 29 zugeordnet sein kann, jedoch extern zum Innenraum 13 der Druckhaube 2 angeordnet ist. Der Anschluss 18 ist über wenigstens eine Verbindungsleitung 22 mit der Auslassöffnung 18 verbunden.

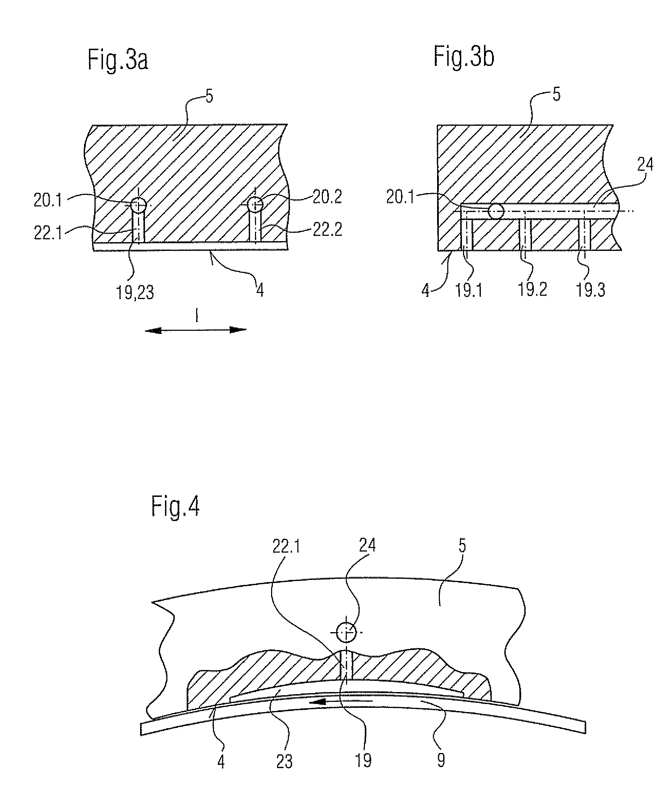

Dabei sind unterschiedliche Möglichkeiten der Zufuhr von Schmiermedium zur Dichtfläche 4 denkbar. Gemäß einer besonders vorteilhaften Ausführung wird jedoch ein sich über die Breite b und Länge I des Dichtelementes 5 gleichmäßig erstreckender Schmierfilmes 17 angestrebt. Beispielhaft sind in den Figuren 3a und 3b zwei Möglichkeiten der Schmiermittelversorgung durch das Dichtelement 5 anhand eines Ausschnittes aus einem Längsschnitt eines Dichtelementes 5, d.h. quer zur Bewegungsrichtung des bewegten Bauteiles 6 dargestellt. Die Figur 3a verdeutlicht dabei eine Ausführung mit einer sich über die Erstreckung über die Maschinenbreite, d.h. der Länge I des Dichtelementes 5 erstreckenden Auslassöffnung 19, vorzugsweise in Form einer sich über die Breite gleichmäßig mit gleichmäßigen Abmessungen erstreckenden Nut 23, welche über eine Mehrzahl von Verbindungs- beziehungsweise Versorgungsleitungen 22.1 bis 22.n, hier 22.2 über Anschlüsse 20.1 und 20.2 mit Schmiermittel versorgt wird. Dabei wird vorzugsweise eine Mehrzahl derartiger Versorgungsleitungen 22.1 bis 22.n über die Länge I des Dichtelementes 5 verwendet, um einen gleichmäßig ausgebildeten Schmierfilm zu gewährleisten und damit den Verschleiß der Dichtelemente 5 über die Maschinenbreite, d.h. die Breite des Trockenzylinders 7 konstant zu halten. Denkbar wäre auch gemäß Figur 3b beispielhaft eine Ausführung mit einer Mehrzahl von Auslassöffnungen 19.1 bis 19.n an der Dichtfläche 4, die über eine zentrale Versorgungsleitung 24 mit Schmiermedium versorgt wird, wobei die zentrale Versorgungsleitung 24 mit den einzelnen Auslassöffnungen 19.1 bis 19.n über Verbindungsleitungen 22.1 bis 22.n verbunden ist. Die zentrale Versorgungsleitung 24 wird über wenigstens einen Anschluss 20, vorzugsweise eine Mehrzahl von Anschlüssen 20.1 bis 20.n mit Schmiermedium versorgt. Die Figuren 3a und 3b sind dabei Beispiele. Diese können hinsichtlich der Ausgestaltung, insbesondere Geometrie, Dimensionierung der Auslassöffnungen 19.1 bis 19.n, ihre Erstreckung in Längs- und in Querrichtung bezogen auf das relativ zum Bauelement 1 bewegte Element 6 variieren. Dies gilt ferner für die Anordnung der Auslassöffnungen 19.1 bis 19.n und/oder Anschlüsse 20.1 bis 20.n in Längs- und/oder Querrichtung bezogen auf das bewegte Bauteil 6, insbesondere auf den Trockenzylinder 7 sowie die Anordnung zueinander, insbesondere mit gleichmäßigem oder unterschiedlichem Abstand zueinander.

Um eine Verteilung des Schmiermediums auch in Umfangsrichtung, das heißt in Relativbewegungsrichtung des Bandes 9 gegenüber der Dichtfläche 4 zu gewährleisten, wird die Geometrie der Nut 23 gemäß Figur 4 im Querschnitt betrachtet an die Oberfläche des bewegten Bauteiles 6 im Dichtbereich angepasst. Dies bedeutet, dass die Nut 23 auch durch eine entsprechend verlängerte Gestaltung in Umfangsrichtung des Trockenzylinders 7 charakterisiert ist. Vorzugsweise erstreckt sich die Nut 23 auch hier über die gesamte Erstreckung der Dichtfläche 4 quer zur Bewegungsrichtung des bewegten Bauteiles 6. Denkbar wären auch eine Mehrzahl von nebeneinander quer zur Bewegungsrichtung des bewegten Bauteiles angeordnete und zueinander beabstandete Nuten. In diese Nut 23 mündet dann wenigstens eine, vorzugsweise münden eine Mehrzahl von Verbindungsleitungen 22.1 bis 22.n, die entweder direkt oder über eine zentrale Versorgungsleitung 24 und einem oder mehreren Anschlüssen 20 mit einer Schmiermediumquelle 21 verbunden sind.

Die Führung für die einzelnen Verbindungs- und Versorgungsleitungen durch das Dichtelement 5 kann, wie bereits ausgeführt, verschiedenartig erfolgen, wobei auch hier eine gleichmäßige Versorgung über die gesamte Dichtfläche 4 angestrebt wird.

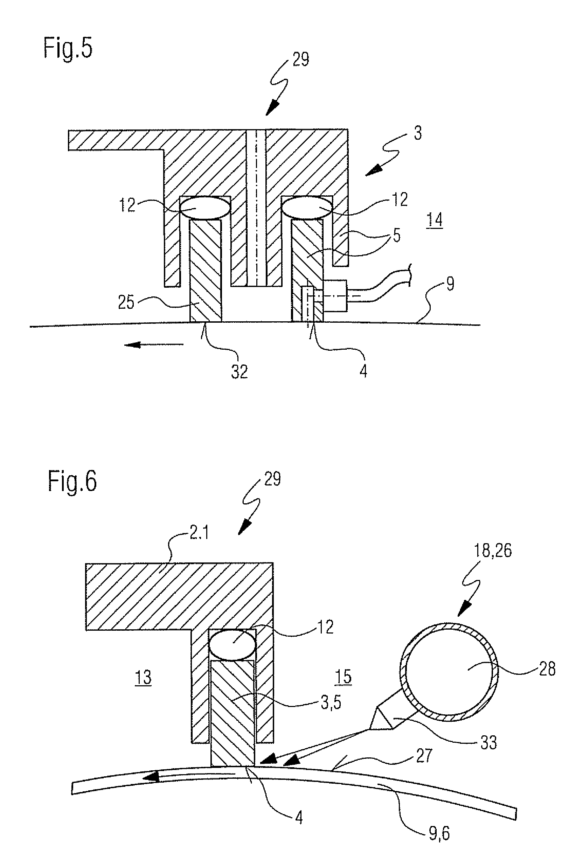

Verdeutlichen die Figuren 1 bis 4 Möglichkeiten einer direkten Schmiermedienversorgung der Dichtfläche 4 durch direkte Zufuhr zur Dichtfläche 4 oder eine in diese eingearbeitete Ausnehmung, zum Beispiel eine Einzeldichtung, verdeutlicht Figur 5 beispielhaft eine Ausführung mit mehrstufiger Dichtung in einer Querschnittsansicht. In diesem Fall sind in Umfangsrichtung betrachtet entsprechend der Ausführung in Figur 2 bei Anwendung zur Abdichtung einer Druckhaube 2 gegenüber einem Trockenzylinder 7, insbesondere einem um diesen geführten Bandes 9, in Umfangsrichtung hintereinander geschaltete Dichtelemente vorgesehen. Die Dichtungsanordnung 3 umfasst wenigstens zwei Dichtelemente, ein erstes Dichtelement 5 und ein zweites Dichtelement 25, wobei das zweite Dichtelement 25 in Laufrichtung des Bandes 9 im Einlauf in die Druckhaube 2 dem ersten Dichtelement 5 vorgeschaltet ist und in Auslaufrichtung betrachtet in Umfangsrichtung beziehungsweise Rotationsrichtung des Trockenzylinders 7 dem Dichtelement 5 nachgeordnet ist. Dabei sind die Mittel 16 wenigstens dem äußeren Dichtelement, hier dem Dichtelement 5 zugeordnet. Die Mittel 16 für das Dichtelement 5 können analog zu denen in Figur 1 ausgeführt sein, wobei bei mehrstufigen Dichtungsanordnungen 3 für das äußere Dichtelement 5 anstelle des Schmiermediums Wasser ein Gas, vorzugsweise Luft verwendet wird, um ein Austreten von Leckagewasser an die Umgebung 15 zu vermeiden, indem ein Schmierfilm 17 gebildet wird, der die Funktion einer Sperrluftschicht übernimmt.

Die Versorgung kann analog wie in der Figur 1 für das Dichtelement 5 dargestellt und ferner hier beispielhaft in der Figur 5 für das erste Dichtelement 5 verdeutlicht, erfolgen.

Denkbar ist es auch, zusätzlich das zweite Dichtelement 25, insbesondere dessen Dichtfläche 32 mit Schmiermedium zu versorgen. Dies kann durch Mittel 16 analog wie in den Figuren 1 bis 4 beispielhaft dargestellt erfolgen. Dabei können für beide Dichtelemente 5, 25 das gleiche Schmiermedium oder unterschiedliche Medien eingesetzt werden. Die konkrete Auswahl erfolgt entsprechend den Gegebenheiten des Einsatzfalles.

Verdeutlichen die Figuren 1 bis 5 beispielhaft Ausführungen mit direktem Auftrag des Schmiermediums auf die Dichtfläche 4, verdeutlicht Figur 6 eine weitere zweite Ausführungsform einer erfindungsgemäßen Dichtungsanordnung 3 mit indirektem Auftrag durch Auftrag des Schmiermediums auf die Oberfläche 27 des relativ zur Dichtfläche 4 bewegten Bauelementes 6, hier des Bandes 9. Die Figur 6 verdeutlicht dabei in Analogie zu Figur 2 einen Ausschnitt aus einer Querschnittsansicht einer Trockeneinrichtung 29. Der Pfeil charakterisiert die Bewegung der Bandes 9. Die Anordnung des Dichtelementes 5 in der Druckhaube 2 und dessen Aufbau, ausgenommen der Mittel 16 entspricht dem in den Figuren 1 bis 5 beschriebenen. Das Dichtelement 5 selbst ist jedoch hier frei von einer Schmiermedienführung durch das Dichtelement 5. Die Mittel 16 zum wenigstens mittelbaren Auftrag von Schmiermedium auf die Dichtfläche 4 umfassen hier ein außerhalb des Innenraumes 13, d.h. in der Umgebung 15 angeordnetes Schmiermedienversorgungssystem 18 Auftragseinrichtung 26, beispielsweise in Form eines Spritzrohres 28, das Schmiermedium auf die Oberfläche 27 des Bandes 9, welches hier quasi das Bauteil 6 der Dichtpaarung bildet, aufträgt. Der Auftrag erfolgt dabei in Bandlaufrichtung betrachtet dem Dichtelement 5 vorgeordnet. Der Auftrag über das Spritzrohr 28 erfolgt vorzugsweise über Düsen 33, wobei hier beispielsweise entweder eine über die gesamte Breite sich erstreckende Düse vorgesehen ist oder eine Mehrzahl von Einzeldüsen. Die Mittel 16 umfassen somit in jedem Fall zumindest ein Schmiermedienversorgungssystem 18 und eine entsprechende Auftragseinrichtung, entweder 26 oder über den Anschluss 20 in den Bereich der Dichtfläche 4. Dabei kann der Auftrag des Schmiermediums in Bewegungsrichtung beziehungsweise Laufrichtung des Bandes 9 und damit des Bauteiles 6 und/oder über die Breite, das heißt quer zur Laufrichtung, variabel gesteuert werden. Dies hängt konkret von den Einsatzerfordernissen und den örtlichen Gegebenheiten ab. Die Schmiermedienmenge ist dabei zumindest steuerbar. Vorzugsweise kann diese auch geregelt werden, beispielsweise indem in Abhängigkeit der sich tatsächlich ausbildenden Schmierfilmdicke an der Dichtfläche diese eingestellt und beibehalten wird. Ferner kann durch die Regelung auch auf Unebenheiten unter Beibehaltung einer gleichmäßigen Schmierwirkung reagiert werden.

### Bezugszeichenliste

- 1: Bauelement
- 2: Druckhaube
- 3: Dichtungsanordnung
- 4: Dichtfläche
- 5: Dichtelement
- 6: Bauteil
- 7: Trockenzylinder
- 8.1, 8.2: Trockensieb
- 9, 9.1: Band
- 10: Faserstoffbahn
- 11: Dichtleistenhalter
- 12: Einrichtung zur Dichtungsanpressung
- 13: Innenraum
- 14: Wandung
- 15: Umgebung
- 16: Mittel zum Auftrag eines Schmiermediums auf die Dichtfläche
- 17: Schmierfilm
- 18: Schmiermedienversorgungssystem
- 19, 19.1 bis 19.n: Auslassöffnung
- 20, 20.1 bis 20.n: Anschluss
- 21: Schmiermittelquelle
- 22, 22.1 bis 22.n: Verbindungsleitungen
- 23: Nut
- 24: zentrale Versorgungsleitung
- 25: zweites Dichtelement
- 26: Auftragseinrichtung
- 27: Oberfläche
- 28: Spritzrohr
- 29: Trockeneinrichtung
- 30: Längskante
- 31: Längskante
- 32: Dichtfläche
- 33: Düse
- R: Rotationsachse
- b: Erstreckung in Längsrichtung
- I: Erstreckung quer zur Längsrichtung

## Patentansprüche

1. Dichtungsanordnung (3) zur Abdichtung eines ersten, ein unter Druck stehendes Medium enthaltendes Bauelement (1) durch wenigstens ein, eine Dichtfläche (4) aufweisendes Dichtelement (5) gegenüber einem relativ zum Dichtelement (5) bewegten Bauteil (6), **dadurch gekennzeichnet, dass**
Mittel (16) zum wenigstens mittelbaren Auftrag eines Schmiermediums auf die Dichtfläche (4) vorgesehen sind.

2. Dichtungsanordnung (3) nach Anspruch 1, **dadurch gekennzeichnet, dass**
das Schmiermedium ein Gas oder Gasgemisch ist.

3. Dichtungsanordnung (3) nach Anspruch 1, **dadurch gekennzeichnet, dass**
das Schmiermedium ein Fluid, vorzugsweise Wasser oder ein Fluid - Gas - Gemisch ist.

4. Dichtungsanordnung (3) nach einem der Ansprüche 1 bis 3, **dadurch gekennzeichnet, dass**
das Schmiermedium durch das Dichtelement (5) hindurch zur Dichtfläche (4) geführt wird.

5. Dichtungsanordnung (3) nach Anspruch 4, **dadurch gekennzeichnet, dass**
die Mittel (16) ein mit der Dichtfläche (4) gekoppeltes Schmiermedienversorgungssystem (18) aufweisen, umfassend wenigstens einen Anschluss (20, 20.1 bis 20.n) am Dichtelement (5), der über wenigstens eine Verbindungsleitung mit wenigstens einer Auslassöffnung (19, 19.1 bis 19.n) an der Dichtfläche (4) verbunden ist und der mit wenigstens einer Schmiermedienquelle (21) außerhalb des ersten Bauteiles (1) verbunden ist.

6. Dichtungsanordnung (3) nach Anspruch 5, **dadurch gekennzeichnet, dass**
eine Mehrzahl von Auslassöffnungen (19.1 bis 19.n) über die Erstreckung des Dichtelementes (4) quer und/oder in Bewegungsrichtung des bewegten Bauteiles (6) angeordnet sind.

7. Dichtungsanordnung (3) nach Anspruch 6, **dadurch gekennzeichnet, dass**
die Auslassöffnungen (19.1 bis 19.n) über die Erstreckung des Dichtelementes (4) quer und/oder in Bewegungsrichtung des bewegten Bauteiles (6) mit unterschiedlicher Geometrie und/oder Dimensionierung und/oder Abstand zueinander angeordnet sind.

8. Dichtungsanordnung (3) nach Anspruch 5, **dadurch gekennzeichnet, dass**
eine sich quer zur Bewegungsrichtung des bewegten Bauteiles (6) sich über die gesamte Dichtfläche (4) erstreckende Auslassöffnung (19, 23) vorgesehen ist.

9. Dichtungsanordnung (3) nach einem der Ansprüche 5 bis 8, **dadurch gekennzeichnet, dass**
die Auslassöffnung (19, 23) in Bewegungsrichtung des bewegten Bauteiles (6) verlängert ausgeführt ist.

10. Dichtungsanordnung (3) nach einem der Ansprüche 1 bis 3, **dadurch gekennzeichnet, dass**
die Mittel (16) ein Schmiermedienversorgungssystem (18) aufweisen, umfassend eine Auftragseinrichtung (26) zum Auftrag von Schmiermedium auf die Oberfläche (27) des bewegten Bauteiles (6), wobei die Auftragseinrichtung (26) in Bewegungsrichtung des bewegten Bauteiles (6) dem Dichtelement (5) vorgeordnet ist.

11. Dichtungsanordnung (3) nach Anspruch 10, **dadurch gekennzeichnet, dass**
die Auftragseinrichtung (26) ein Spritzrohr (28) mit einer Mehrzahl von quer zur Bewegungsrichtung des bewegten Bauteiles (6) angeordneten Düsen (33) umfasst.

12. Dichtungsanordnung (3) nach Anspruch 10, **dadurch gekennzeichnet, dass**
die Auftragseinrichtung (26) ein Spritzrohr mit einer quer zur Bewegungsrichtung des bewegten Bauteiles (6) angeordneten Düse (33) umfasst.

13. Dichtungsanordnung (3) nach einem der Ansprüche 1 bis 12, **dadurch gekennzeichnet, dass**
diese mehrstufig ausgeführt ist, umfassend ein weiters Dichtelement (25), welches zwischen einem das unter Druck stehende Medium beinhaltenden Innenraum (13) und dem Dichtelement (5) angeordnet ist, wobei wenigstens der in Bezug auf den Innenraum (13) äußeren Dichtung (5) Mittel (16) zugeordnet sind.

14. Dichtungsanordnung (3) nach Anspruch 13, **dadurch gekennzeichnet, dass**
dem weiteren Dichtelement (25) Mittel (16) zugeordnet sind.

15. Dichtungsanordnung (3) nach einem der Ansprüche 1 bis 14, **dadurch gekennzeichnet, dass**
die Schmiermedienmenge über die Dichtfläche (4) frei einstellbar ist.

16. Verwendung einer Dichtungsanordnung (3) gemäß einem der Ansprüche 1 bis 15 in einer Maschine zur Herstellung einer Faserstoffbahn (10) mit wenigstens einer Trockeneinrichtung (29), umfassend einen beheizbaren Trockenzylinder (7) oberhalb dessen ein wenigstens teilweise auf dem Trockenzylinder (7) abgestütztes Maschinenelement, insbesondere eine Druckhaube (2) angeordnet ist, wobei die Druckhaube (2) das erste Bauelement (1) bildet und der Trockenzylinder (7) das relativ zum ersten Bauelement (1) bewegte Bauteil (6) bildet.

17. Verwendung nach Anspruch 16, **dadurch gekennzeichnet, dass**
die Faserstoffbahn (10) zusammen mit mindestens einer undurchlässigen Bespannung (9) zwischen dem Trockenzylinder (7) und der Druckhaube (2) hindurchführbar ist.

18. Verwendung einer Dichtungsanordnung (3) gemäß einem der Ansprüche 1 bis 15 in einer Maschine zur Herstellung einer Faserstoffbahn (10) mit wenigstens einer Glätteinrichtung, umfassend einen beheizbaren Glättzylinder oberhalb dessen ein wenigstens teilweise auf dem Glättzylinder abgestütztes Maschinenelement, insbesondere eine Druckhaube (2) angeordnet ist, wobei die Druckhaube (2) das erste Bauelement (1) bildet und der Glättzylinder (7) das relativ zum ersten Bauelement (1) bewegte Bauteil (6) bildet.

19. Verwendung nach Anspruch 18, **dadurch gekennzeichnet, dass**
die Faserstoffbahn (10) zusammen mit mindestens einer undurchlässigen Bespannung (9) zwischen dem Glättzylinder und der Druckhaube (2) hindurchführbar ist.
